# EUROPEAN PATENT SPECIFICATION

(11) **EP 1 142 738 B1**
(45) Date of publication and mention of the grant of the patent: **28.07.2004**
(21) Application number: 01107529.8
(22) Date of filing: 26.03.2001
(51) Int. Cl.: B60J 5/04

(54) **Construction to fix outer skin panel to a motor vehicle door**
Konstruktion für Befestigung vom Aussenblech an der Kraftfahrzeugtür
Construction pour attacher le panneau extérieur à la porte d'une voiture

(30) Priority: 05.04.2000 IT TO000323
(43) Date of publication of application: 10.10.2001
(73) Proprietor: COMAU SPA, 10095 Grugliasco (Torino) (IT)
(72) Inventor: Coppero, Elio, 10090 Rosta (Torino) (IT); Molina, Giuseppe, 10029 Villastellone (Torino) (IT)
(74) Representative: Fioravanti, Corrado

(56) References cited:
- EP-A- 0 434 552
- DE-A- 19 514 963
- DE-A- 19 648 528
- DE-C- 19 746 724
- US-A- 5 446 999

## Description

The present invention relates to a motor vehicle door with an outer skin panel and including a frame with peripheral edges with associated means for attaching the respective edges of the skin panel.

In the prior art, the outer skin panel of a motor vehicle door is generally secured to the frame with the same fixing means on each edge of the skin panel, for example welding, or adhesive or mechanical fixing means such as screws. The use of such known fixing means makes the operation for fixing the outer skin panel relatively complex and expensive, in particular in the case of securing a skin panel of plastics material to a metal frame.

DE 195 14 963 Al discloses a motor vehicle door of the type defined in the preamble of claim 1. Here the outer skin panel is fixed to the door frame via a hook formation which in force-fitted onto the engagement means formed at a peripheral edge of the frame. Other prior art solutions are known from DE 197 46 724 C1 and EP 0 434 552 A1.

In order to overcome the above mentioned disadvantages, the present invention provides a motor vehicle door as defined in claim 1.

Thanks to this arrangement, the outer skin panel can be simply and rapidly fixed to the frame, while ensuring that the connection is secure and also that stress is evenly spread across the skin panel.

Further characteristics and advantages of the invention will become apparent from the detailed description which follows, provided purely by way of non-limitative example, with reference to the appended drawings, in which:

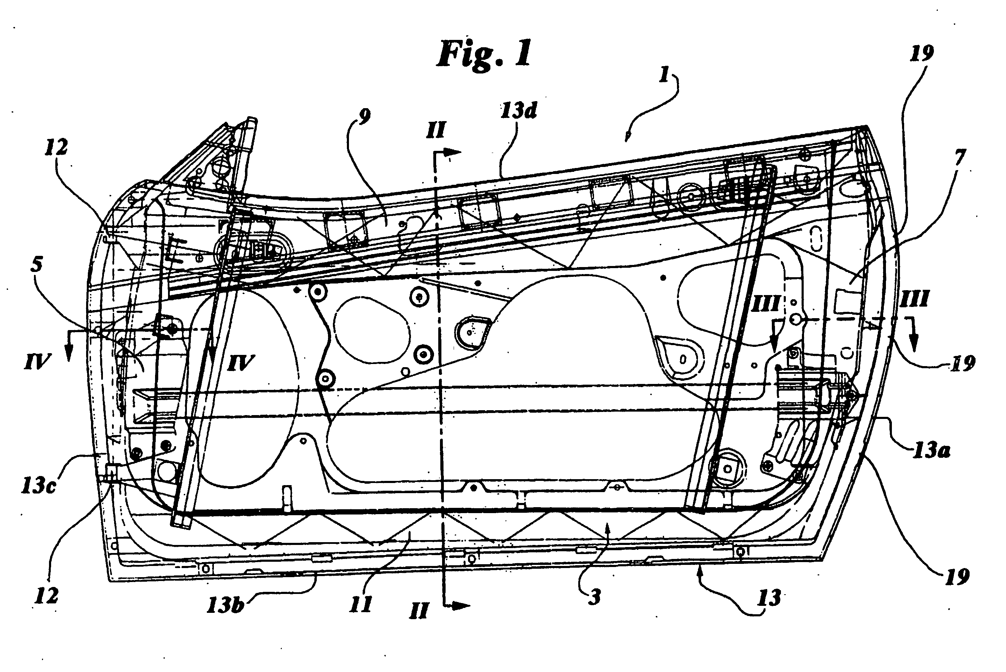

Figure 1 is a schematic elevational side view from the inside of a door according to the invention provided with an outer skin panel;

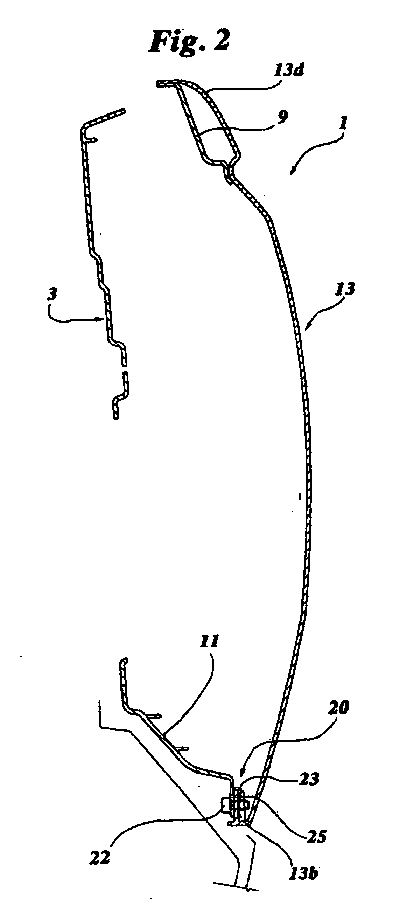

Figure 2 is an elevational sectioned view taken on the line II-II of Figure 1;
Figure 3 is an elevational sectioned view taken on the line III-III of Figure 1;

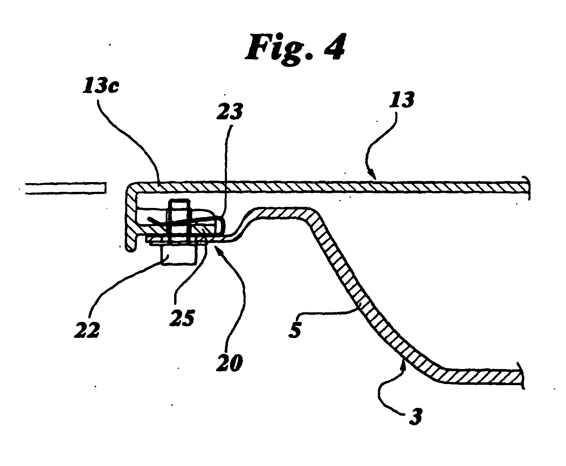

Figure 4 is an elevational sectioned view taken on the line IV-IV of Figure 1;
Figure 5 is a schematic view on an enlarged scale of a detail similar to that indicated by the arrow V in Figure 3, illustrating a variant of that shown in Figure 3;
Figure 6 is a fragmentary perspective view as seen in the direction of the arrow VI of Figure 5;
Figure 7 is an elevational sectioned view taken on the line VII-VII of Figure 5; and .
Figure 8 is an elevational sectioned view taken on the line VIII-VIII of Figure 5.

With reference to the figures, a door of a motor vehicle is generally indicated 1, specifically a front right hand door.

The door 1 includes a light-alloy frame 3, preferably a magnesium-alloy frame, shaped like a half-shell. Referring to the door as installed on a motor vehicle, the frame includes a front upright 5 and a rear upright 7, substantially parallel to each other and rigidly connected at their upper and lower portions by a pair of cross members 9 and 11, upper and lower respectively.

The casting of the frame 3 is made by hot forming the light alloy constituting it, typically in a die-casting operation whereby the molten alloy is poured into a die under pressure, or in a thixoforming operation whereby light-alloy elements are heated until they reach a plastic consistency then compressed into a mould, causing the elements, in particular the uprights 5, 7 and the cross members 9, 11 to be formed in one piece.

The frame 3 is intended to have a skin panel 13 attached to its external surface, with reference to the orientation of the door once fitted onto a motor vehicle, this skin panel (13) preferably being constituted by a relatively thin layer of a plastics material.

In particular, the panel 13 has a rear edge 13a at the side opposite from a pair of hinges 12 fixed to the frame 3, a lower edge 13b, a front edge 13c, opposite the edge 13a and a top edge 13d.

Along the rear edge 13a, the panel 13 has a lip 15 bent over substantially parallel to or only slightly inclined to the general plane of the panel and connected to the rest of the panel 13 by a perpendicular flange 14. The lip 15 and the flange 14 constitute a hook formation on the panel 13 for hooking to an associated peripheral edge of the frame 3.

On this edge of the frame 3 is formed an elongate support strip portion (7a), parallel to the general plane of the panel 13 and forming a support on the frame 3 for a portion of the inner surface of the skin panel 13 adjacent the flange 14. The remainder of the upright 7 of the frame 3 is joined to the support strip 7a by a part perpendicular to it, thereby forming a corner which defines a hollow portion in the associated perimetral edge of the door 1.

At this hollow portion, a series of ribs 18 are formed, preferably integrally with the support strip 7a and therefore also with the casting 3, spaced, for example, by a few centimetres and each extending transverse the support strip 7a. The ribs 18 form abutment elements for forcibly engaging in the seat formed between the panel 13 and the lip 15 thereof, that is in the hook formation of the panel 13.

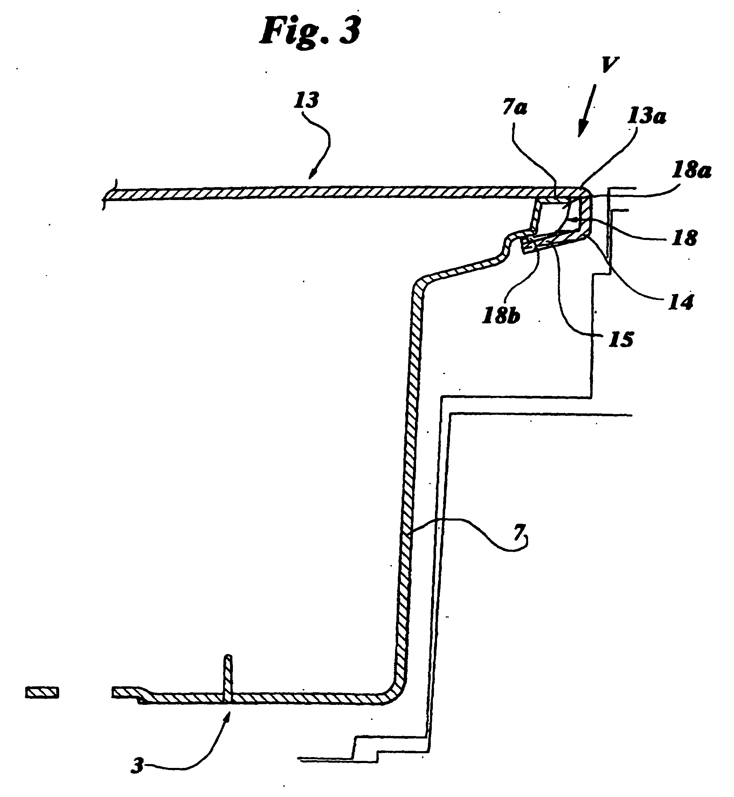

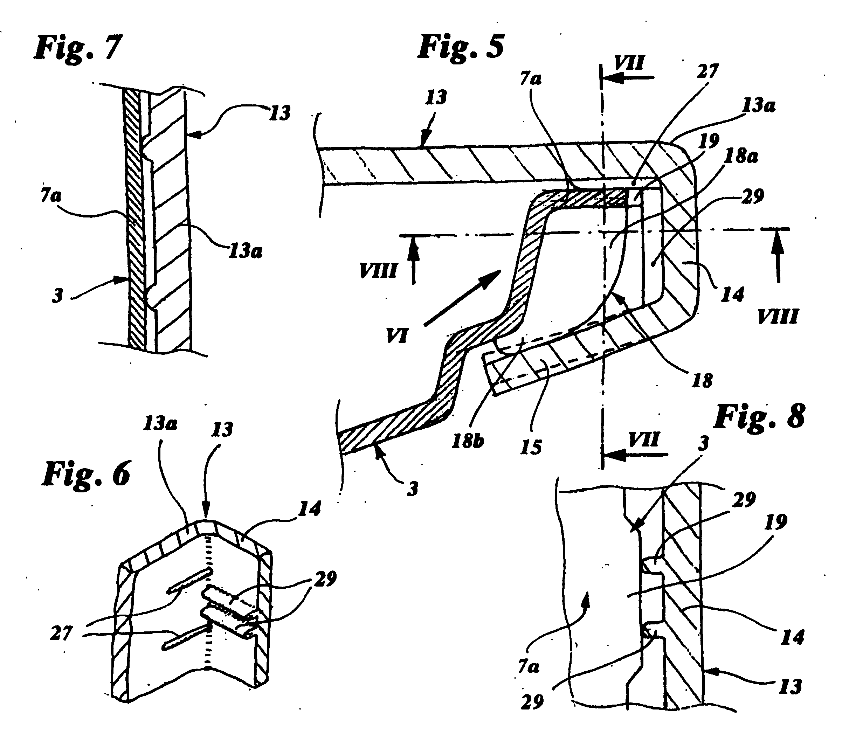

Conveniently, each rib 18 has an arcuate shape curving from an apex portion 18a nearest the support strip 7a to a projecting nose 18b at the end opposite the portion 18a. The distance between the outer edge of the nose 18b and the support strip 7a, that is the maximum extent of each rib 18 transverse the strip 7a, is preferably slightly greater than the distance between the free edge of the lip 15 and the overall plane of the panel 13, in the undeformed configuration of the lip 15, indicated in broken outer line in Figures 3 and 5.

In this way, once the series of ribs 18 is inserted into the seat formed between the skin panel 13 and the lip 15, the lip 15 is slightly resiliently deformed (position indicated in a solid line in Figures 3 and 5), with the free edge thereof moving away from the skin panel 13, thereby force-fitting the hook portion of the skin panel 13 over the ribs 18. This enables the edge 13a of the skin 13 to be fitted to the frame 3 without the need for additional fixing operations beyond the simple mutual engagement of the edge 13a and the ribs 18 and the exertion of a traction force on the skin panel 13 relative to the frame 3.

Thanks to this force fit, any stress on the skin panel 13 after it is positioned on the frame 3 is evenly distributed with any play between the skin panel and the frame being taken up, since the depth to which the ribs 18 fit into the hook formation of the skin panel 13 varies according to the stress on the various areas of the skin panel, as a result of the resilient deformation of the lip 15.

On the other three edges of the frame 3, the skin panel 13 is fitted in a substantially conventional manner. The edges 13b and 13c are fixed with screw means 20, for example, each of these including a screw 22 engaging a hole through a respective metal clip 23 fitted into a support element 25 formed integrally with the skin panel 13, while the top edge 13d thereof is fixed to the cross member 9 of the frame 3 by means of an interposed adhesive material, preferably of the type known in the art as semistructural. Alternatively, or in addition, an adhesive material can be interposed between each edge of the skin panel 13 and the associated edges of the frame 3.

Figures 5 to 8 of the drawings illustrate a variant of a detail indicated by the arrow V in Figure 3. In this variant, parallel ridges are formed near the inner surface of a corner formed between the skin panel 13 and the flange 14 in order to make the strip 7a, and thus the frame 3, abut more accurately on the hook formation of the skin panel 13.

In particular, these ridges lie in planes parallel to those of the ribs 18, that is in planes parallel to a longitudinal axis of the skin panel 13, and include a first series of ridges 27 formed on the inner surface of the skin panel 13 and preferably extending to the corner formed by the skin panel 13 with the flange 14, and a second series of ridges 29 which extend along the inner surface of the flange 14, between the skin panel 13 and the lip 15.

The ridges 27 are spaced by about 20-30 mm, for example, and each has a rounded free end, with a radius of curvature of around 0.5mm. Together, the free ends of the series of ridges 27 form an ideal flat surface for abutting the surface of the strip 7a facing the skin panel 13, since this ideal flat surface does not suffer from any of the lack of precision that the construction process could cause in the dimensions of the internal surface of the skin panel 13.

The ridges 29 comprise, for example, three widely spaced pairs of ridges forming an abutment for the free edge of the strip 7a, with the ridges of each pair being spaced by about 10-12 mm, for example. Each pair of ridges 29 is preferably arranged so that a reference tab 19, projecting from the edge of the frame 3 facing the surface 13a of the skin panel 13, abuts against it. It is convenient if each tab 19 is in the shape of a trapezoid and is formed integrally with the casting of the frame 3, on the free end of the strip 7a, and is sheared, after casting, in order accurately to define its length relative to the frame 3. Being each of a predetermined length, the tabs 19 form accurate reference elements for coupling the skin panel 13 to the frame 3.

## Claims

1. A motor vehicle door with an outer skin panel (13) constituted by a relatively thin sheet of material and a frame (3) with peripheral edges having associated connection means for the edges (13a, 13b, 13c, 13d) of the skin panel,
at least one edge (13a) of the skin panel having a hook formation (14, 15) to be force-fitted onto an engagement means (18) formed at a peripheral edge of the frame (3),
said hook formation (14, 15) of the skin panel (13) including a resiliently deformable folded lip (15) substantially parallel to the overall plane of the skin panel (13), such that when the lip (15) is not deformed, the distance between the lip (15) and the skin panel (13) is less than the dimension of the said engagement members (18) transverse to the overall plane of the skin panel (13), and once the hook formation (14, 15) is engaged with the said engagement members (18), the folded lip (15) of the skin panel (13) is deformed, moving away from the overall plane of the skin panel (13),
**characterised in that** ridges (29) are formed inside the said hook formation of the skin panel (13), against which the relevant edge (7a) of the frame (3) can abut, thus ensuring that the skin panel (13) is accurately positioned relative to the frame (3), the said ridges including pairs of ridges (29) formed on the inner surface of a perpendicular flange (14) of the skin panel (13) to constitute an accurately dimensioned abutment for the relevant edge (7a) of the frame (3) to bear against, the said pairs of ridges (29) being for frontal engagement by respective reference tabs (19) extending from the relevant edge (7a) of the frame (3).

2. A door according to Claim 1, **characterised in that** the frame (3) is made of a light alloy, in particular a magnesium alloy, and is manufactured in a forming operation during which the said engagement means (18) are formed integrally with the relevant edge (7a) of the frame (3).

3. A door according to Claim 1 or 2, **characterised in that** the said engagement means include a series of ribs (18) which project transverse the relevant edge (7a) of the frame (3).

4. A door according to Claim 3, **characterised in that** each rib (18) curves from an apex portion (18a) facing outwardly of the frame (3), so as to favour insertion of the said series of ribs (18) in the hook formation (14, 15) of the skin panel (13).

## Patentansprüche

1. Kraftfahrzeugtür mit einem aus einer relativ dünnen Materialschicht gebildeten Außenblech (13) und einem Rahmen (3) mit Umfangsrändern, welche dazugehörige Verbindungsmittel für die Ränder (13a, 13b, 13c, 13d) der Blechplatte aufweisen,
wobei zumindest ein Rand (13a) der Blechplatte eine Hakenformation (14, 15) aufweist, welche in ein an einem Umfangsrand des Rahmens (3) gebildetes Eingriffsmittel (18) kraftschlüssig einzusetzen ist,
und die Hakenformation (14, 15) der Blechplatte (13) eine elastisch verformbare Faltlippe (15) umfasst, die zur Gesamtebene der Blechplatte (13) im Wesentlichen parallel ist, so dass der Abstand zwischen der Lippe (15) und der Blechplatte (13) geringer ist als die Abmessung der quer zur Gesamtebene der Blechplatte (13) liegenden Eingriffsglieder (18), wenn die Lippe (15) nicht verformt ist, und die Faltlippe (15) der Blechplatte (13) verformt wird und sich dabei von der Gesamtebene der Blechplatte (13) entfernt, sobald die Hakenformation (14, 15) mit den Eingriffsgliedern (18) in Eingriff kommt,
**dadurch gekennzeichnet, dass** im Inneren der Hakenformation der Blechplatte (13) Leisten (29) gebildet sind, an denen der relevante Rand (7a) des Rahmens (3) anstoßen kann, wodurch sichergestellt wird, dass die Blechplatte (13) im Verhältnis zum Rahmen (3) exakt positioniert wird, wobei die Leisten Paare von Leisten (29) umfassen, die an der Innenseite eines vertikalen Flansches (14) der Blechplatte (13) gebildet sind, um ein exakt bemessenes Widerlager zu bilden, auf dem der relevante Rand (7a) des Rahmens (3) aufliegen kann, wobei die Paare von Leisten (29) dafür da sind, von entsprechenden Bezugsstücken (19), die sich aus dem relevanten Rand (7a) des Rahmens (3) erstrecken, frontal in Eingriff genommen zu werden.

2. Tür gemäß Anspruch 1, **dadurch gekennzeichnet, dass** der Rahmen (3) aus einer Leichtmetalllegierung, insbesondere einer Magnsiumlegierung, gefertigt ist und in einem Formungsvorgang hergestellt wird, bei dem die Eingriffsmittel (18) in den relevanten Rand (7a) des Rahmens (3) integriert werden.

3. Tür gemäß Anspruch 1 oder 2, **dadurch gekennzeichnet, dass** die Eingriffsmittel eine Reihe von Rippen (18) umfassen, welche quer zum relevanten Rand (7a) des Rahmens (3) herausragen.

4. Tür gemäß Anspruch 3, **dadurch gekennzeichnet, dass** sich jede Rippe (18) von einem Scheitelabschnitt (18a) krümmt, und zwar vom Rahmen (3) nach außen gerichtet, um das Einsetzen der Reihe von Rippen (18) in die Hakenformation (14, 15) der Blechplatte (13) zu begünstigen.

## Revendications

1. Porte de voiture avec un panneau de revêtement externe (13) composé d'une feuille relativement fine de matériau et d'un châssis (3) avec des bords périphériques dotés de moyens de raccordement associés pour les bords (13a, 13b, 13c, 13d) du panneau de revêtement,
d'au moins un bord (13a) du panneau de revêtement doté d'une formation de crochet (14, 15) pour être monté par force sur des moyens de mise en prise (18) formés au niveau d'un bord périphérique du châssis (3),
de ladite formation de crochet (14, 15) du panneau de revêtement (13) comprenant une lèvre (15) pliée déformable de manière résiliente sensiblement parallèle au plan d'ensemble du panneau de revêtement (13), de sorte qu'au moment où la lèvre (15) n'est pas déformée, la distance entre la lèvre (15) et le panneau de revêtement (13) est inférieure à la dimension desdits éléments de mise en prise (18) transversaux au plan d'ensemble du panneau de revêtement (13), et une fois que la formation de crochet (14, 15) est mise en prise avec lesdits éléments de mise en prise (18), la lèvre (15) pliée du panneau de revêtement (13) est déformée, s'éloignant du plan d'ensemble du panneau de revêtement (13), **caractérisée en ce que** des saillies (29) sont formées à l'intérieur de ladite formation de crochet du panneau de revêtement (13), contre laquelle le bord correspondant (7a) du châssis (3) peut venir en butée, garantissant ainsi que le panneau de revêtement (13) est précisément positionné par rapport au châssis (3), lesdites saillies comprenant des paires de saillies (29) formées sur la surface interne d'un rebord perpendiculaire (14) du panneau de revêtement (13) pour constituer une butée précisément dimensionnée pour le bord correspondant (7a) du châssis (3) afin de s'appuyer contre, lesdites paires de saillies (29) étant prévues pour la mise en prise frontale avec des pattes (19) de référence respectives s'étendant à partir du bord correspondant (7a) du châssis (3).

2. Porte selon la revendication 1, **caractérisée en ce que** le châssis (3) est réalisé avec un alliage léger, en particulier un alliage de magnésium, et est fabriqué dans une opération de formage pendant laquelle lesdits moyens de mise en prise (18) sont formés de manière solidaire avec le bord correspondant (7a) du châssis (3).

3. Porte selon la revendication 1 ou 2, **caractérisée en ce que** lesdits moyens de mise en prise comprennent une série de nervures (18) qui fait saillie de manière transversale par rapport au bord correspondant (7a) du châssis (3).

4. Porte selon la revendication 3, **caractérisée en ce que** chaque nervure (18) se courbe à partir d'une partie de sommet (18a) orientée vers l'extérieur du châssis (3), afin de favoriser l'insertion de ladite série de nervures (18) dans la formation de crochet (14, 15) du panneau de revêtement (13).
